# EUROPEAN PATENT SPECIFICATION

(11) **EP 3 251 525 B1**
(45) Date of publication and mention of the grant of the patent: **24.07.2024**
(21) Application number: 16743574.2
(22) Date of filing: 29.01.2016
(51) Int. Cl.: A23L 27/00, A23L 27/50, A23L 11/00, A23L 27/10

(54) **PINK SEASONING**
ROSAFARBENES GEWÜRZ
ASSAISONNEMENT ROSE

(30) Priority: 29.01.2015 JP 2015016139
(43) Date of publication of application: 06.12.2017
(73) Proprietor: Brilliant Associates Co. Ltd., Tottori-shi, Tottori 680-0043 (JP)
(72) Inventor: FUKUSHIMA, Tomiko, Tottori-shi Tottori 680-0043 (JP)
(74) Representative: Hoffmann Eitle
(86) International application number: PCT/JP2016/052794
(87) International publication number: WO 2016/121971

(56) References cited:
- WO-A1-2012/066960
- JP-A- 2008 237 195
- JP-A- 2013 138 687
- JP-A- 2014 176 318
- JP-A- H0 367 557
- JP-A- H01 225 459
- JP-A- H02 308 772
- US-A1- 2012 107 481
- NIHONKAI SHINBUN, PINK NO SHOYU TOJO CURRY NI TSUZUKU DAI 2 DAN, 23 December 2014 (2014-12-23), pages 24, XP009505394
- "Habahiroi Sedai no Kata ni Tsukatte morai, Pink-iro no Shoyu de Hanayaida Shokutaku o Kazatte moraereba", GAZO ARI] MITAME GA AZAYAKA NA PINK! NO SHOYU TOJO WWWWW CURRY NI TSUZUKU DAI 2 DAN, 27 December 2014 (2014-12-27), XP009505397, Retrieved from the Internet <URL:http://www.gurum.biz/articles/36140.html> [retrieved on 20160315]
- YASUHIKO ISHIKAWA, THE ENCYCLOPEDIA OF COOKING AND FOOD, 27 July 1996 (1996-07-27), pages 399, XP009505325, ISBN: 4-07-214741-9

## Description

### TECHNICAL FIELD

The present invention relates to the color tone of a seasoning containing soy sauce.

### BACKGROUND ART

Various types of soy sauce are known such as strong soy sauce, light soy sauce, tamari soy sauce or saishikomi soy sauce (soy sauce brewed in soy sauce again). Most of these soy sauces assume a reddish brown or black color tone.

Any attempt to apply a color to soy sauce has not been made until now. In addition, even if an attempt to apply a color to soy sauce is made, because the original color tone of soy sauce is reddish brown or black, it has been difficult to apply a bright color to soy sauce. In addition, in a case where an additive to apply a color is added when applying a color to soy sauce, there has been a problem in that the original taste and flavor of soy sauce are reduced.

Although foodstuffs which lend color to dining tables by their bright colors, and brilliantly arrange special events and anniversaries as typified by Sakuramochi (a rice cake filled with sweet bean paste and wrapped in a salted cherry leaf) and Sakura-denbu (dried shredded peach-colored fish seasoned with sugar and soy sauce) have been already known, a seasoning which can show such pomp has not been developed until now.

JP 2014 176318 A relates to a solid seasoning produced by impregnating a porous body containing cellulose or indigestible dextrin, and starch or water-soluble polysaccharide with a seasoning liquid containing a volatile component.

WO 2012/066960 A1 describes an alanine-containing food product which can enhance taste by blending with alanine.

US 2012/107481 A1 provides a packed soy sauce-containing liquid seasoning, containing sodium, potassium, proline and isoleucine.

NIHONKAI SHINBUN: PINKO NO SHOYU TOJO CURRY NI TSUZUKU DAI 2 DAN, 23 December 2014, page 24 is a newspaper article that relates to peach-colored soy sauce and Habahiroi Sedai no Kata ni Tsukatte morai Pink-iro no Shoyu de Hanayaida Shokutaku o Kazatte Moraereba, 27 December 2014 is the corresponding article on the internet.

YASUHIKO ISHIKAWA in THE ENCYCLOPEDIA OF COOKING AND FOOD, 27 JULY 1996 on page 399 describes a process for producing soy sauce and general matters concerning soy sauce.

JP H01 225459 A (and EP 414 945), JP H02 308772 A and JP H03 67557 A relate to soy sauce comprising coloring agents.

JP2013 138687 A provides a cloudiness-imparting agent which easily imparts a feeling of cloudiness without causing a feeling of incompatibility to taste and texture which the food and drink have.

JP 2008 237195 A relates to a processed food containing microfibrous cellulose having creamy and smooth texture and high degree of whiteness.

### SUMMARY OF INVENTION

### TECHNICAL PROBLEM

The present invention solves the above problem and an object thereof is to provide a seasoning with an unconventional color tone, which has the taste and flavor of soy sauce and simultaneously assume a bright peach color.

### SOLUTION TO PROBLEM

The present invention relates to a peach-colored seasoning containing white soy sauce, a clouding agent and a red coloring as defined in claim 1.

Preferred embodiments of the peach-colored seasoning are the subject of the dependent claims 2 to 9.

The present invention further relates to a food using the peach-colored seasoning.

### ADVANTAGEOUS EFFECTS OF THE INVENTION

According to the present invention, there can be provided a seasoning with an unconventional color tone, which has the taste and flavor of soy sauce and simultaneously assumes a bright peach color.

### DESCRIPTION OF EMBODIMENTS

Embodiments of the present invention will be described below, it should be noted however that the present invention is not limited thereto.

The peach-colored seasoning of the present invention is a peach-colored soy sauce-based seasoning containing white soy sauce. White soy sauce is a soy sauce made by fermenting koji made of wheat as a main ingredient and a small amount of soybean at a low temperature for a short period of time. The color tone of white soy sauce is light amber colored transparent color. In addition, since the main ingredient is wheat, white soy sauce has a feature that the sugar content is high compared to that of common soy sauce.

Most of soy sauces except for white soy sauce assume reddish brown or black as their color tone, and it is thus difficult to produce a peach-colored seasoning using a soy sauce except for white soy sauce in a large amount. The color tone of white soy sauce, meanwhile, is a transparent color assuming light amber, and it is thus possible to produce a peach-colored seasoning using white soy sauce.

The content of white soy sauce is preferably 14.0 to 15.5 mass%, more preferably 14.6 to 15.2 mass%, and further preferably 14.9 to 15.1 mass%. When the content of white soy sauce is less than 14.0 mass%, the taste and flavor of a peach-colored seasoning tends to become weak. When the content of white soy sauce is more than 15.5 mass%, the taste of a peach-colored seasoning tends to become too thick and the peach-colored seasoning tends to be tinged with black.

When soy sauce except for white soy sauce is contained, the content of soy sauce except for white soy sauce is preferably 1 mass% or less, and more preferably 0.5 mass% or less. When the content of soy sauce except for white soy sauce is more than 1 mass%, a peach-colored seasoning tends to be tinged with black.

The peach-colored seasoning of the present invention contains a clouding agent as specified in claim 1. The seasoning can be clouded by adding the clouding agent.

In general, as the distance for which light passes through a seasoning is short, the color tone of the seasoning is easily recognized as a light color tone, and as the distance for which light passes through a seasoning is long, the color tone is easily recognized as a dark color tone. Therefore, for example when a seasoning is not cloudy but semitransparent, the color tone of the seasoning may vary depending on the conditions of visual observation.

In the case of common soy sauce, for example, it looks semitransparent light reddish brown when poured in small amounts into a shallow container such as a dish, but looks close to opaque blackish brown when stored in large amounts in a deep container such as a bottle.

In the same way, for example, in a case where the color tone of a seasoning has a semitransparent peach color, it looks a light pale peach color close to transparent in some cases when poured in small amounts into a shallow container such as a dish, but looks a dark reddish purple color in some cases when stored in large amounts in a deep container such as a bottle.

Conversely, when the color tone of a seasoning is not made semitransparent but cloudy, a fixed color tone can be expressed regardless of the conditions that the color tone of the seasoning is visually observed.

In the present invention, the clouding agent, which contains powdered cellulose and/or crystalline cellulose, is capable of imparting a cloudy feeling to the seasoning. Moreover, by virtue of it containing powdered cellulose and/or crystalline cellulose, the clouding agent for use in the present invention is a hardly soluble additive. "Hardly soluble" means, for example, properties that only less than 10 g is dissolved in 1 L of water at room temperature.

As long as it contains powdered cellulose and/or crystalline cellulose, the clouding agent which can be used in the present invention is not particularly limited, and examples thereof include polysaccharide clouding agents other than powdered cellulose and/or a crystalline cellulose preparation, such as cross-linked starch, protein clouding agents such as silk powder, powdered bones or soybean protein, fat clouding agents such as vegetable fat, animal fat, marine fat, milk fat, nuts fat, cacao butter, shea butter or synthetic fat, or emulsifiers such as sucrose fatty acid ester, glycerin fatty acid ester, saponin or lecithin, or foods containing milk and the like as a main ingredient. Foods containing milk and the like as a main ingredient mean those in which an emulsifier and a stabilizer are blended with milk fat, or those in which a part or all of the milk fat is substituted with vegetable fat. In the present invention, powdered cellulose and/or a crystalline cellulose preparation is used from viewpoints that a moderate cloudy feeling is imparted with a suitable amount thereof and a taste and texture do not deteriorate.

Powdered cellulose is cellulose in the form of powder obtained by finely crushing purified cellulose. The content of powdered cellulose is preferably 3.9 to 4.5 mass%, more preferably 3.9 to 4.1 mass%, and further preferably 3.98 to 4.02 mass%. When the content of powdered cellulose is less than 3.9 mass%, cloudiness tends to be insufficient. When the content of powdered cellulose is more than 4.5 mass%, a peach-colored seasoning tends to be too cloudy to mar its appearance and its texture tends to become worse.

The crystalline cellulose preparation is cellulose in which amorphous parts are removed from a raw material such as pulp and only pure crystal parts are collected and purified. The content of crystalline cellulose preparation is preferably 0.60 to 1.00 mass%, and more preferably 0.75 to 0.85 mass%. When the content of crystalline cellulose preparation is less than 0.60 mass%, cloudiness tends to be insufficient. When the content of crystalline cellulose preparation is more than 1.00 mass%, a peach-colored seasoning tends to be too cloudy to mar its appearance, its viscosity tends to become too high, and its texture tends to become worse.

The total content of the clouding agent is preferably 4.0 to 5.1 mass%, more preferably 4.5 to 5.1 mass%, further preferably 4.6 to 5.0 mass%, and particularly preferably 4.7 to 4.9 mass%. When the total content of the clouding agent is less than 4.0 mass%, cloudiness tends to be insufficient. When the total content of the clouding agent is more than 5.1 mass%, a peach-colored seasoning tends to be too cloudy to mar its appearance, and its texture tends to become worse.

The peach-colored seasoning of the present invention contains a red coloring. A red color tone can be imparted to a seasoning by adding the red coloring.

The red coloring which can be used in the present invention is not particularly limited, and examples thereof include a natural red coloring such as a red beet-derived color preparation, a carthamus red color preparation, a monascus color preparation, a cochineal color preparation, a gardenia red color preparation, a tomato color preparation, a perilla color preparation, a red cabbage color preparation, a red radish color preparation, a purple sweet potato color preparation, a purple corn color preparation, a grape color preparation or berry color preparation, and a synthetic red coloring such as amaranth, erythrosine, Allura Red AC, New Coccine, phloxine, Rose Bengal or acid red. Among these, a red beet-derived color preparation is preferred from the viewpoints of a clear color tone and stability to pH. In addition, a carthamus red color preparation is preferred from the viewpoints of stability to sunlight and heat and stability to pH.

The content of red beet-derived color preparation is preferably 0.015 to 0.045 mass%, more preferably 0.020 to 0.040 mass%, and further preferably 0.025 to 0.035 mass%. When the content of red beet-derived color preparation is less than 0.015 mass%, red color development tends to be insufficient. When the content of red beet-derived color preparation is more than 0.045 mass%, red color development tends to be excessive.

The content of carthamus red color preparation is preferably 0.5 to 0.7 mass%, and more preferably 0.55 to 0.65 mass%. When the content of carthamus red color preparation is less than 0.5 mass%, red color development tends to be insufficient. When the content of carthamus red color preparation is more than 0.7 mass%, red color development tends to be excessive.

The total content of the red coloring is preferably 0.55 to 0.70 mass%, more preferably 0.60 to 0.65 mass%, and further preferably 0.62 to 0.64 mass%. When the total content of the red coloring is less than 0.55 mass%, red color development tends to be insufficient. When the total content of the red coloring is more than 0.70 mass%, red color development tends to be excessive.

In order that the peach-colored seasoning of the present invention displays a peach color, the mixing ratio of the red coloring to the clouding agent is preferably 1/0.125 to 1/0.135, more preferably 1/0.129 to 1/0.133, and further preferably 1/0.130 to 1/0.132. When the mixing ratio of the clouding agent to the red coloring is less than 1/0.125, the color tone of the peach-colored seasoning tends to be tinged with white. When the mixing ratio of the clouding agent to the red coloring is above 1/0.135, the color tone of the peach-colored seasoning tends to be tinged with red.

The peach-colored seasoning of the present invention is characterized by displaying a peach color as a color tone. Herein, the peach color tone is not particularly limited as long as the color tone is expressed by mixing a red color and a white color. That is, the peach color in the description of the present application is the representative name of color expressed by mixing a red color and a white color, and is the generic name of a color tone called such as pink, cherry pink, magenta, rose red, an azalea pink color, Arazome (a light pink color which is a traditional color of Japan) , a cherry color, rose pink, baby pink, shell pink, salmon pink, peach, Kobai color (a light pink color which is a traditional color of Japan) or Toki color (a light and easy pink with a tinge of yellowness a little which is a traditional color of Japan) in addition to a peach color.

In the peach-colored seasoning of the present invention, the red coloring displays a red color, and the clouding agent displays a white color. A peach color tone is expressed by blending the red coloring with a red color and the clouding agent with a white color.

It is preferred that the peach-colored seasoning of the present invention contain a sugar group. A moderate sweet taste can be imparted to the peach-colored seasoning by adding a soluble sugar group besides the clouding agent.

The sugar group which can be used in the present invention is not particularly limited, and examples thereof include sugar, starch syrup, fruit sugar, malt sugar, invert sugar, isomerized sugar, glucose, sucrose, oligosaccharides and the like.

The content of sugar is preferably 13.4 to 13.6 mass%. When the content of sugar is less than 13.4 mass%, the sweet taste of the peach-colored seasoning is reduced and the salty taste thereof tends to increase. When the content of sugar is more than 13.6 mass%, the sweet taste of the peach-colored seasoning increases and the salty taste thereof tends to be relatively reduced.

The content of starch syrup is preferably 4.9 to 5.1 mass%. When the content of starch syrup is less than 4.9 mass%, the sweet taste of the peach-colored seasoning is reduced and the salty taste thereof tends to relatively increase. When the content of starch syrup is more than 5.1 mass%, the sweet taste of the peach-colored seasoning increases and the salty taste thereof tends to be relatively reduced and the viscosity of the peach-colored seasoning tends to increase.

The total content of sugar group is preferably 18.3 to 18.7 mass%, and more preferably 18.4 to 18.6 mass%. When the total content of sugar group is less than 18.3 mass%, the sweet taste of the peach-colored seasoning is reduced and the salty taste thereof tends to relatively increase. When the content of sugar group is more than 18.7 mass%, the sweet taste of the peach-colored seasoning increases and the salty taste thereof tends to be relatively reduced.

It is preferred that the peach-colored seasoning of the present invention contain an umami component. A moderate umami taste can be imparted to the peach-colored seasoning by adding an umami component.

The umami component which can be used in the present invention is not particularly limited, and examples thereof include protein hydrolysate, dried bonito extract, dried bonito extract powder, seasoning bonito powder, kombu extract powder, seasoning kombu powder, chicken extract, yeast extract or an amino acid seasoning and the like, or a seasoning preparation such as a monosodium L-glutamate preparation, a DL-alanine preparation, a glycine preparation or a sodium 5'-ribonucleotide preparation and the like.

The total content of umami component is preferably 22.5 to 23.0 mass%, and more preferably 22.6 to 22.9 mass%. When the total content of umami component is less than 22.5 mass%, the umami taste of the peach-colored seasoning tends to be reduced. When the content of umami component is more than 23.0 mass%, the taste of the peach-colored seasoning tends to become strong.

It is preferred that the peach-colored seasoning of the present invention contain salt. A moderate salty taste can be imparted to the peach-colored seasoning by adding salt.

The content of salt is preferably 7.3 to 7.5 mass%. When the content of salt is less than 7.3 mass%, the salty taste of the peach-colored seasoning is reduced and the sweet taste thereof tends to relatively increase. When the content of salt is more than 7.5 mass%, the peach-colored seasoning tends to become salty.

It is preferred that the peach-colored seasoning of the present invention contain an alcohol. Preservation after opening a container can be improved by adding an alcohol.

The alcohol which can be used in the present invention is not particularly limited, and examples thereof include ethanol and the like.

The content of alcohol is preferably 1.90 to 2.10 mass%, and more preferably 1.95 to 2.05 mass%. When the content of alcohol is less than 1.90 mass%, preservation after opening a container tends to be reduced. When the content of alcohol is more than 2.10 mass%, the taste and flavor of the peach-colored seasoning tend to be reduced.

It is preferred that the peach-colored seasoning of the present invention contain a thickening agent. A moderate viscosity can be imparted to the peach-colored seasoning by adding the thickening agent.

The thickening agent which can be used in the present invention is not particularly limited, and examples thereof include processed starch, xanthan gum, pectin, guar gum, tamarind gum, carrageenan, propylene glycol or carboxymethyl cellulose and the like.

The total content of the thickening agent is preferably 0.85 to 0.92 mass%. When the total content of the thickening agent is less than 0.85 mass%, the viscosity of the peach-colored seasoning is reduced and a red coloring tends to be easily precipitated. When the total content of the thickening agent is more than 0.92 mass%, the viscosity of the peach-colored seasoning tends to increase.

It is preferred that the peach-colored seasoning of the present invention contain an acidulant. By adding an acidulant, a moderate acid taste can be imparted to the peach-colored seasoning and the oxidation of the peach-colored seasoning can be prevented.

The acidulant which can be used in the present invention is not particularly limited, and examples thereof include acetic acid, citric acid, succinic acid, lactic acid, malic acid, tartaric acid, gluconic acid or phosphoric acid and the like.

The content of the acidulant is preferably 0.08 to 0.11 mass%. When the content of the acidulant is less than 0.08 mass%, the peach-colored seasoning tends to be easily oxidized. When the content of acidulant is more than 0.11 mass%, the acid taste of the peach-colored seasoning tends to become strong.

A sweetener which can be used in the present invention is not particularly limited, and examples thereof include licorice, stevia, sucralose, trehalose, sorbitol, aspartame, saccharin sodium, xylitol, maltitol, palatinose, thaumatin or acesulfame potassium and the like.

In the production of the peach-colored seasoning of the present invention, the strength of taste, color tone or volume, for example, can be adjusted using water (called adjusting water).

The peach-colored seasoning of the present invention can be used instead of common soy sauce. A dish with an unconventional appearance which has the taste and flavor of soy sauce and simultaneously assumes a peach color can be provided by using the peach-colored seasoning of the present invention as a substitute for common soy sauce.

The peach-colored seasoning of the present invention can be used to produce the whole of food provided using soy sauce. Foods with an unconventional appearance which have the taste and flavor of soy sauce and simultaneously display a peach color can be produced by producing foods using the peach-colored seasoning of the present invention instead of common soy sauce.

### EXAMPLES

The examples of the present invention will be described below. It should be noted, however, that the present invention is not limited thereto. Ingredients shown in Table 1 are weighed in the blending ratio of masses shown in Table 1 and mixed.

**[Table 1]**

| Ingredient name | Remarks | Blending Ratio |
|---|---|---|
| Sugar group (sugar) | - | 13.50 |
| Sugar group (starch syrup) | - | 5.00 |
| White soy sauce | - | 15.00 |
| Salt | - | 7.40 |
| Clouding agent | Powdered cellulose | 4.00 |
| Clouding agent | Preparation containing crystalline cellulose and dextrin at a ratio of 1 : 1.65 | 0.80 |
| Umami component | Seasoning liquid containing dried bonito extract, protein hydrolysate, a Kokumi (Kokumi (thick and bodied taste and flavor)) seasoning | 23.00 |
| Ethanol | - | 2.00 |
| Thickening agent | Processed starch containing corn starch as an ingredient | 0.80 |
| Thickening agent | Xanthan gum | 0.10 |
| Acidulant | Lactic acid for food | 0.10 |
| Red coloring | Water-soluble red beet color preparation | 0.03 |
| Red coloring | Powdered carthamus red color preparation | 0.60 |
| Sweetener | Licorice | 0.08 |
| Sweetener | Stevia | 0.01 |
| Adjusting water | - | 27.58 |
| Total | | 100.00 |

A mixture of ingredients obtained by mixing was sterilized with heat until 98°C in a jacketed heating pot. The heated mixture was cooled by lowering the temperature to 70°C.

The Brix, salt content and viscosity of the cooled mixture were measured. The Brix was measured by a hand-held refractometer (manufactured by ATAGO CO., LTD.), the salt content was measured in Mohr method, and the viscosity was measured by a BM-type viscosity. The measurement values of the above measurement items are shown in Table 2.

**[Table 2]**

| Measurement items | Measurement values |
|---|---|
| Brix | 44 |
| Salt content (%) | 13 |
| Viscosity (mPa · s) | 2100 |

The tested mixture was treated with a magnet strainer (11000 gauss, 20 mesh) to remove foreign matters.

The peach-colored seasoning mixture obtained by removing foreign matters was packed into a low density polyethylene container under the conditions of temperature of 60°C. The measured weight of the packed mixture was 20.0 to 20.2 kg. The visually confirmed color tone of the obtained peach-colored seasoning was a peach color.

## Claims

1. A peach-colored seasoning comprising white soy sauce, a clouding agent and a red coloring,
**characterized in that** the clouding agent contains powdered cellulose and/or crystalline cellulose.

2. The peach-colored seasoning according to claim 1, wherein the mixing ratio of the red coloring to the clouding agent is 1/0.125 to 1/0.135.

3. The peach-colored seasoning according to claim 1 or 2, wherein the content of the red coloring is 0.55 to 0.70 mass%.

4. The peach-colored seasoning according to claim 1 or 3, wherein the content of the clouding agent is 4.0 to 5.1 mass%.

5. The peach-colored seasoning according to any one of claims 1 to 4, wherein the content of white soy sauce is 14.0 to 15.5 mass%.

6. The peach-colored seasoning according to any one of claims 1 to 5, wherein the red coloring contains a red beet-derived color and/or a carthamus red color.

7. The peach-colored seasoning according to any one of claims 1 to 6, further containing a sugar group.

8. The peach-colored seasoning according to any one of claims 1 to 7, further containing an umami component.

9. The peach-colored seasoning according to any one of claims 1 to 8, further containing a thickening agent.

10. A food using the peach-colored seasoning according to any one of claims 1 to 9.

## Patentansprüche

1. Pfirsichfarbenes Würzmittel, umfassend weiße Sojasauce, ein Trübungsmittel und einen roten Farbstoff,
**dadurch gekennzeichnet, dass** das Trübungsmittel Cellulosepulver und/oder kristalline Cellulose enthält.

2. Pfirsichfarbenes Würzmittel gemäß Anspruch 1, wobei das Mischungsverhältnis von dem roten Farbstoff zu dem Trübungsmittel 1/0,125 bis 1/0,135 beträgt.

3. Pfirsichfarbenes Würzmittel gemäß Anspruch 1 oder 2, wobei der Gehalt des roten Farbstoffs 0,55 bis 0,70 Massen-% beträgt.

4. Pfirsichfarbenes Würzmittel gemäß Anspruch 1 oder 3, wobei der Gehalt des Trübungsmittels 4,0 bis 5,1 Massen-% beträgt.

5. Pfirsichfarbenes Würzmittel gemäß einem der Ansprüche 1 bis 4, wobei der Gehalt der weißen Sojasauce 14,0 bis 15,5 Massen-% beträgt.

6. Pfirsichfarbenes Würzmittel gemäß einem der Ansprüche 1 bis 5, wobei der rote Farbstoff einen aus roter Bete stammenden Farbstoff und/oder einen roten Karthamus-Farbstoff enthält.

7. Pfirsichfarbenes Würzmittel gemäß einem der Ansprüche 1 bis 6, ferner enthaltend eine Zuckergruppe.

8. Pfirsichfarbenes Würzmittel gemäß einem der Ansprüche 1 bis 7, ferner enthaltend eine Umami-Komponente.

9. Pfirsichfarbenes Würzmittel gemäß einem der Ansprüche 1 bis 8, ferner enthaltend ein Verdickungsmittel.

10. Lebensmittel, das das pfirsichfarbene Würzmittel gemäß einem der Ansprüche 1 bis 9 verwendet.

## Revendications

1. Assaisonnement de couleur pêche comprenant de la sauce soja blanche, un agent de turbidité et un colorant rouge,
**caractérisé en ce que** l'agent de turbidité contient de la cellulose en poudre et/ou de la cellulose cristalline.

2. Assaisonnement de couleur pêche selon la revendication 1, dans lequel le rapport de mélange entre le colorant rouge et l'agent de turbidité est de 1/0,125 à 1/0,135.

3. Assaisonnement de couleur pêche selon la revendication 1 ou la revendication 2, dans lequel la teneur en colorant rouge est de 0,55 à 0,70 % en masse.

4. Assaisonnement de couleur pêche selon la revendication 1 ou la revendication 3, dans lequel la teneur en agent de turbidité est de 4,0 à 5,1 % en masse.

5. Assaisonnement de couleur pêche selon l'une quelconque des revendications 1 à 4, dans lequel la teneur en sauce soja blanche est de 14,0 à 15,5 % en masse.

6. Assaisonnement de couleur pêche selon l'une quelconque des revendications 1 à 5, dans lequel le colorant rouge contient une couleur dérivée de betterave rouge et/ou une couleur rouge de carthame.

7. Assaisonnement de couleur pêche selon l'une quelconque des revendications 1 à 6, contenant en outre un groupe sucre.

8. Assaisonnement de couleur pêche selon l'une quelconque des revendications 1 à 7, contenant en outre un composant umami.

9. Assaisonnement de couleur pêche selon l'une quelconque des revendications 1 à 8, contenant en outre un agent épaississant.

10. Nourriture utilisant l'assaisonnement de couleur pêche selon l'une quelconque des revendications 1 à 9.
